# EUROPÄISCHE PATENTSCHRIFT

(11) **EP 2 926 984 B1**
(45) Veröffentlichungstag und Bekanntmachung des Hinweises auf die Patenterteilung: **20.02.2019**
(21) Anmeldenummer: 14163425.3
(22) Anmeldetag: 03.04.2014
(51) Int. Cl.: B29C 73/10, B29D 99/00, F03D 1/06, F03D 80/40, B29L 31/08

(54) **Verfahren zum Reparieren eines elektrischen Heizelements eines Windenergieanlagenrotorblatts**
Method for repairing an electric heating element of a wind turbine rotor blade
Procédé de réparation d'un élément de chauffage électrique d'une pale de rotor d'éolienne

(43) Veröffentlichungstag der Anmeldung: 07.10.2015
(73) Patentinhaber: Nordex Energy GmbH, 22419 Hamburg (DE)
(72) Erfinder: Krueger, Bernhard, 22941 Bargteheide (DE); Ahrens, Tobias, 44287 Dortmund (DE)
(74) Vertreter: Hauck Patentanwaltspartnerschaft mbB

(56) Entgegenhaltungen:
- US-A- 5 958 166
- US-A1- 2009 053 406
- US-A1- 2010 135 820
- US-A1- 2011 036 482

## Beschreibung

Die Erfindung betrifft ein Verfahren zum Reparieren eines elektrischen Heizelements eines Windenergieanlagenrotorblatts. Es ist bekannt, Windenergieanlagenrotorblätter mit einem oder mehreren elektrischen Heizelementen auszustatten, um Oberflächenbereiche des Rotorblatts beheizen zu können. Auf diese Weise kann einer Vereisung des Rotorblatts entgegengewirkt werden, entweder indem ein Eisansatz gänzlich verhindert oder bereits an der Blattoberfläche anhaftendes Eis abgetaut wird. Bekannte elektrische Heizelemente sind zumeist im Bereich der Profilnasenkante und über einen Großteil der Rotorblattlänge an dessen Oberfläche angeordnet. Im Betrieb werden sie mit einem elektrischen Heizstrom versorgt, der das Heizelement beispielsweise in Längs- oder Querrichtung durchströmt. Durch den ohmschen Widerstand des Heizelements entsteht dabei die gewünschte Heizwirkung.

Für einen optimalen Betrieb des Heizelements wird eine über dessen gesamte Fläche gleichmäßige Wärmeentwicklung angestrebt. Dies erfordert einen über die Fläche des Heizelements gleichmäßigen bzw. an die lokal erforderliche Wärmeleistung angepassten elektrischen Widerstand. Abweichungen entstehen insbesondere im Bereich von Fehlstellen des Heizelements. Diese können durch Herstellungsfehler, Transportschäden oder durch mechanische Beschädigung im Betrieb des Windenergieanlagenrotorblatts entstehen. Im Bereich des Heizelements in das Windenergieanlagenrotorblatt einschlagende Blitze oder Überschläge zwischen Heizelement und einem Blitzschutzleiter können ebenfalls Fehlstellen verursachen.

Im Bereich einer Fehlstelle ist die elektrische Leitfähigkeit des Heizelements beeinträchtigt oder ganz unterbrochen. Dies führt zu zwei unerwünschten Effekten: In Bereichen des Heizelements, die der Fehlstelle in Bezug auf die Heizstromrichtung seitlich benachbart sind, kommt es zu einer höheren Stromdichte und infolgedessen zu erhöhten Temperaturen. Diese Bereiche werden auch als Hotspots bezeichnet. Innerhalb der Fehlstelle und in Heizstromrichtung davor oder dahinter kommt es überdies zu Bereichen mit Untertemperatur. Diese Bereiche werden auch als Coldspots bezeichnet. Beide Effekte können unerwünschte Schäden zur Folge haben. Insbesondere im Bereich großflächiger Coldspots kann das Heizelement einen Eisansatz unter Umständen nicht mehr verhindern. Im Bereich der Hotspots können so hohe Temperaturen entstehen, dass das Laminat, insbesondere eine die Verstärkungsfasern umgebende Kunststoffmatrix, beschädigt wird, sodass es im ungünstigsten Fall zu strukturellen, unter Umständen irreparablen Schäden am Windenergieanlagenrotorblatt kommen kann.

Bei einem bekannten Verfahren zum Reparieren elektrischer Heizelemente wird versucht, im Bereich der Fehlstelle die ursprüngliche elektrische Leitfähigkeit des Heizelements wiederherzustellen. Hierzu wird ein elektrisch leitfähiges Material, vorzugsweise dasselbe Material, aus dem das elektrische Heizelement besteht, im Bereich der Fehlstelle auf das Heizelement aufgebracht und vorzugsweise im Bereich seiner Ränder in elektrischen Kontakt mit dem Heizelement gebracht. Das Herstellen einer elektrischen Kontaktierung zwischen dem Heizelement und dem Reparaturflicken erfordert eine aufwendige mechanische Vorbereitung der Kontaktstellen, was am Einsatzort einer Windenergieanlage häufig nicht durchführbar ist. Unabhängig davon ist es schwierig, die ursprünglichen Widerstandsverhältnisse des Heizelements wieder herzustellen. Insbesondere an den elektrischen Kontaktierungsstellen können Bereiche mit erhöhter Stromdichte auftreten, die ihrerseits zu Hotspots führen können.

Aus der Druckschrift US 2010/0135820 A1 ist ein Reparaturverfahren für Windenergieanlagenrotorblätter bekannt geworden, bei dem ein beschädigter Hauptgurt aus einem laminierten Fasermaterial durch Entfernen eines beschädigten Abschnitts und passgenaues Einfügen eines Ersatzstücks, ebenfalls aus einem laminierten Fasermaterial, instandgesetzt wird.

Davon ausgehend ist es die Aufgabe der Erfindung, ein Verfahren zum Reparieren eines elektrischen Heizelements eines Windenergieanlagenrotorblatts zur Verfügung zu stellen, das einfach anwendbar ist und mit dem aus einer Fehlstelle resultierende Folgeschäden zuverlässig verhindert werden können.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zum Reparieren eines elektrischen Heizelements eines Windenergieanlagenrotorblatts und weist die folgenden Schritte auf:
- Identifizieren eines Bereichs des Heizelements, der eine Fehlstelle aufweist,
- Aufbringen einer Reparaturschicht auf den identifizierten Bereich, die wärmeleitfähig und mindestens an einer der Fehlstelle zugewandten Unterseite elektrisch isolierend ist.

Das elektrische Heizelement kann sich an einer Oberfläche des Windenergieanlagenrotorblatts befinden. Es besteht aus einem flächigen Material mit einem definierten elektrischen Widerstand. Das Heizelement kann ein Kohlenstofffasermaterial aufweisen, insbesondere ein Gelege aus Kohlenstofffasern. Das Kohlenstofffasermaterial kann in eine Kunststoffmatrix eingebettet sein, beispielsweise durch Auflaminieren auf ein vorgefertigtes Windenergieanlagenrotorblatt oder durch Einbetten des Kohlenstofffasermaterials des Heizelements bei der Herstellung des Windenergieanlagenrotorblatts in einer Herstellungsform, insbesondere bei der Herstellung einer Rotorblatthalbschale in einem Vakuuminfusionsverfahren.

Bei dem erfindungsgemäßen Verfahren wird zunächst ein Bereich des Heizelements identifiziert, der eine zu reparierende Fehlstelle aufweist. Dies kann insbesondere durch eine einfache Sichtkontrolle erfolgen, beispielsweise bei einer Kontrolle auf Transportschäden oder im Falle eines Blitzschlages auf eine Verfärbung des Windenergieanlagenrotorblatts im Bereich der Fehlstelle. Natürlich kann eine Fehlstelle auch auf beliebige andere Art und Weise ausfindig gemacht werden, beispielsweise anhand einer erkennbar ungleichmäßigen Heizleistung mit einer Wärmebildkamera. Bei der Fehlstelle kann es sich beispielsweise um einen Kratzer in der Oberfläche des Windenergieanlagenrotorblatts handeln, der so tief ist, dass er die elektrische Leitfähigkeit des Heizelements beeinträchtigt. Je nach Schadensursache und -schwere kann der Bereich der Fehlstelle Abmessungen von wenigen Zentimetern oder mehr aufweisen, beispielsweise etwa handflächengroß.

Nachdem der Bereich des Heizelements mit der Fehlstelle identifiziert wurde, wird auf diesen Bereich eine Reparaturschicht aufgebracht. Die Reparaturschicht ist so groß, dass sie die Fehlstelle vollständig abdeckt.

Die Reparaturschicht kann eine homogene Schicht aus einem einzigen Material oder einem gleichmäßigen Materialgemisch sein. Alternativ kann sie mehrere Teilschichten oder Lagen aufweisen. Insgesamt weist die Reparaturschicht eine hohe spezifische Wärmeleitfähigkeit von mindestens 10 W/m·K auf, oder von beispielsweise mindestens 25 W/m·K. Die Reparaturschicht kann als Flicken, Folie oder Platte ausgebildet sein oder in Form einer Paste aufgetragen werden, etwa wie eine Spachtelmasse.

Die Reparaturschicht ist zumindest an der Unterseite elektrisch isolierend, so dass die elektrische Leitfähigkeit des Heizelements durch die Reparaturschicht nicht verändert wird. Durch die Reparaturschicht fließt kein elektrischer Strom, so dass die elektrische Leistung im Wesentlichen unbeeinflusst bleibt. Die Wirkung der erfindungsgemäßen Reparatur besteht also gerade nicht darin, dass hinsichtlich des Heizstroms die Verhältnisse eines unbeschädigten Heizelements wiederhergestellt werden, sondern in der temperaturausgleichenden Wirkung der wärmeleitfähigen
Reparaturschicht. Da die Reparaturschicht im Bereich der Fehlstelle angeordnet ist und elektrisch, nicht jedoch thermisch von dem Bereich des Heizelements mit der Fehlstelle isoliert ist, kommt es in der Reparaturschicht zu einem Wärmestrom insbesondere von den um die Fehlstelle herum ausgebildeten Hotspots zu den umgebenden Bereichen. Im Ergebnis sinkt die Temperatur an den Hotspots, während sie sich an den Coldspots erhöht. Im Idealfall kann durch diese temperaturausgleichende Wirkung der Reparaturschicht eine im Wesentlichen gleichmäßige Oberflächentemperatur im Bereich der Fehlstelle erreicht werden, obwohl es bei den Beeinträchtigungen des Heizstromflusses durch die Fehlstelle bleibt.

Ergebnis der Reparatur ist ein Windenergieanlagenrotorblatt mit einem elektrischen Heizelement, das eine Fehlstelle aufweist, wobei im Bereich der Fehlstelle eine Reparaturschicht auf dem elektrischen Heizelement angeordnet ist, die mindestens an einer der Fehlstelle zugewandten Unterseite elektrisch isolierend ist.

In einer Ausgestaltung besteht die Reparaturschicht aus einer Lage und weist ein elektrisch nicht leitendes Basismaterial auf, welches mit wärmeleitenden Komponenten verfüllt ist. Die wärmeleitenden Komponenten können ein funktioneller Füllstoff sein, insbesondere Partikel mit einer hohen Wärmeleitfähigkeit. Dies ermöglichte eine gezielte Einstellung der gewünschten Wärmeleitfähigkeit und eine Anpassung an sonstige Anforderungen.

In einer Ausgestaltung ist das Basismaterial ein Polymerwerkstoff. Dieser kann zusätzlich mit Glasfasern verstärkt sein. Dies stellt eine hohe Stabilität sicher. Außerdem kann die Glasfaserverstärkung zu der gewünschten elektrisch isolierenden Eigenschaft der Reparaturschicht insbesondere an deren Unterseite beitragen.

In einer Ausgestaltung umfasst die Reparaturschicht zwei Lagen und das Aufbringen der Reparaturschicht umfasst die folgenden Schritte:
- Aufbringen einer elektrischen Isolationslage auf den identifizierten Bereich, und
- Aufbringen einer wärmeleitfähigen Lage auf die elektrische Isolationslage.

Das Aufbringen der wärmeleitfähigen Lage kann insbesondere nach dem Aufbringen der elektrischen Isolationslage auf den identifizierten Bereich erfolgen. Grundsätzlich ist es aber auch möglich, die Isolationslage und die wärmeleitfähige Lage vor dem Aufbringen auf das Heizelement miteinander zu kombinieren und dann gemeinsam auf das Heizelement aufzubringen. Die elektrische Isolationslage und die wärmeleitfähige Lage werden dauerhaft an der Oberfläche des Windenergieanlagenrotorblatts befestigt, zum Beispiel durch Verkleben. Die wärmeleitfähige Lage ist durch die elektrische Isolationslage von dem stromdurchflossenen Heizelement elektrisch isoliert, sodass in der wärmeleitfähigen Lage kein Strom fließt.
Die wärmeleitfähige Lage kann so bemessen sein, dass sie die Fehlstelle vollständig abdeckt oder zu allen Seiten über die Fehlstelle übersteht, beispielsweise um 2 cm oder mehr, bevorzugt um 5 cm oder mehr. Die wärmeleitfähige Lage ist kleiner als die elektrische Isolationslage, sodass ein unmittelbarer Kontakt zwischen der wärmeleitfähigen Lage und dem Heizelement überall ausgeschlossen ist. Sofern das Heizelement um die Fehlstelle herum von einer hinreichend elektrisch isolierenden Schicht bedeckt ist, beispielsweise einem unbeschädigten Lack, kann die wärmeleitfähige Lage auch über die Ränder der aufgebrachten elektrischen Isolationslage überstehen.

In einer Ausgestaltung weist die wärmeleitfähige Lage eine Stärke im Bereich von 0,1 mm bis 1 mm auf. Insbesondere kann sie eine Stärke im Bereich von 0,2 mm bis 0,5 mm aufweisen. Versuche haben ergeben, dass bei der Wahl eines Materials mit ausreichender thermischer Leitfähigkeit auf diese Weise eine ausreichende, temperaturausgleichende Wirkung erzielt wird. Gleichzeitig werden die aerodynamischen Verhältnisse an der Windenergieanlagenrotorblattoberfläche so wenig wie möglich beeinträchtigt.

In einer Ausgestaltung weist die wärmeleitfähige Lage eine Graphitfolie auf. Dieses Material, das beispielsweise unter dem Markennamen Sigraflex erhältlich ist, weist eine hohe thermische Leitfähigkeit und Hitzebeständigkeit auf. Wegen der hohen Wärmeleitfähigkeit kann mit besonders geringen Schichtdicken gearbeitet werden. Gleichzeitig ist die Graphitfolie ausreichend flexibel, um problemlos an gekrümmte Oberflächenbereiche des Windenergieanlagenrotorblatts angelegt werden zu können.

In einer Ausgestaltung weist die wärmeleitfähige Lage eine metallische Folie auf. Beispielsweise kann eine Folie oder ein Blech aus Kupfer oder Aluminium oder einer eines dieser Metalle enthaltenden Legierung verwendet werden. Auch auf diese Weise wird mit geringen Schichtdicken eine ausreichende temperaturausgleichende Wirkung erzielt.

In einer Ausgestaltung weist das Verfahren den weiteren Schritt auf:
- Aufbringen einer Deckschicht auf die Reparaturschicht.

Die Deckschicht kann die Reparaturschicht und/oder die wärmeleitfähige Lage vor schädigender Außeneinwirkung schützen. Darüber hinaus kann die Deckschicht die Reparaturschicht und/oder die wärmeleitfähige Lage an der Oberfläche des Windenergieanlagenrotorblatts fixieren.

In einer Ausgestaltung steht die Deckschicht über seitliche Ränder der Reparaturschicht über. In diesem Fall kann die Deckschicht die Reparaturschicht, insbesondere die wärmeleitfähige Lage und/oder die Isolationslage optimal schützen und an der Oberfläche des Windenergieanlagenrotorblatts fixieren.

In einer Ausgestaltung weist die Isolationslage und/oder die Deckschicht eine Lage eines Glasfasermaterials auf. Es kann sich insbesondere um ein Gelege, Gewebe oder Geflecht aus Glasfasern handeln. Das Glasfasermaterial kann in eine Kunststoffmatrix eingebettet sein und insbesondere durch Auflaminieren an der Windenergieanlagenrotorblattoberfläche befestigt werden. Eine solche Lage eines Glasfasermaterials weist eine hohe elektrische Isolationswirkung und zugleich eine ausreichende Wärmeleitfähigkeit auf.

In einer Ausgestaltung weisen die Isolationslage und/oder die Deckschicht eine Stärke von weniger als 0,5 mm auf. Die elektrische Isolationswirkung der Isolationslage bzw. die Schutz- und Befestigungswirkung der Deckschicht sind bei dieser Schichtdicke bereits ausreichend. Zugleich werden die aerodynamischen Verhältnisse an der Windenergieanlagenrotorblattoberfläche so wenig wie möglich beeinträchtigt.

In einer Ausgestaltung weist die Reparaturschicht eine Stärke im Bereich von 0,1 mm bis 1 mm auf. Auch dies ist aerodynamisch vorteilhaft.

In einer Ausgestaltung weist das Verfahren den folgenden weiteren Schritt auf:
- Wiederherstellen der elektrischen Leitfähigkeit des Heizelements im Bereich der Fehlstelle vor dem Aufbringen der Reparaturschicht.

Durch diese Maßnahme kann zunächst die ursprüngliche Heizwirkung des Heizelements im Bereich der Fehlstelle zumindest teilweise wieder hergestellt werden. Dies kann insbesondere bei großflächigen Fehlstellen erforderlich sein. Durch die zusätzlich aufgebrachte wärmeleitfähige Lage können verbleibende Unregelmäßigkeiten der Wärmeentwicklung kompensiert werden, sodass insgesamt eine weitgehend gleichmäßige Oberflächentemperatur erzielt wird.

In einer Ausgestaltung wird zum Wiederherstellen der elektrischen Leitfähigkeit ein Flicken aus einem Kohlenstofffasermaterial oder aus einer metallischen Folie im Bereich der Fehlstelle aufgebracht und in elektrischen Kontakt mit dem Heizelement gebracht. Insbesondere kann der Flicken aus demselben Material bestehen wie das zu reparierende Heizelement. Es kann jedoch auch ein anderes elektrisch leitfähiges Material verwendet werden, insbesondere eines, dessen elektrischer Widerstand im Wesentlichen demjenigen des elektrischen Heizelements entspricht.

In einer Ausgestaltung wird zum Wiederherstellen der elektrischen Leitfähigkeit ein elektrisch leitfähiger Klebstoff auf die Fehlstelle aufgebracht. Hierfür geeignet ist beispielsweise ein Epoxidharz, das mit elektrisch leitfähigen Partikeln gemischt ist, insbesondere mit Silberpartikeln. Derartige Klebstoffe werden auch als Leitkleber oder englisch als *conductive epoxy* bezeichnet.

Nachfolgend wird die Erfindung anhand von in drei Figuren dargestellten Ausführungsbeispielen näher erläutert. Es zeigen:
- Fig. 1: eine schematische Darstellung eines Oberflächenbereichs eines Windenergieanlagenrotorblatts, das mit dem erfindungsgemäßen Verfahren repariert wurde,
- Fig. 2: eine Querschnittsdarstellung durch den in Figur 1 dargestellten Oberflächenbereich des Windenergieanlagenrotorblatts, und
- Fig. 3: eine Querschnittsdarstellung durch einen Oberflächenbereich eines anderen, mit dem erfindungsgemäßen Verfahren reparierten Windenergieanlagenrotorblatts.

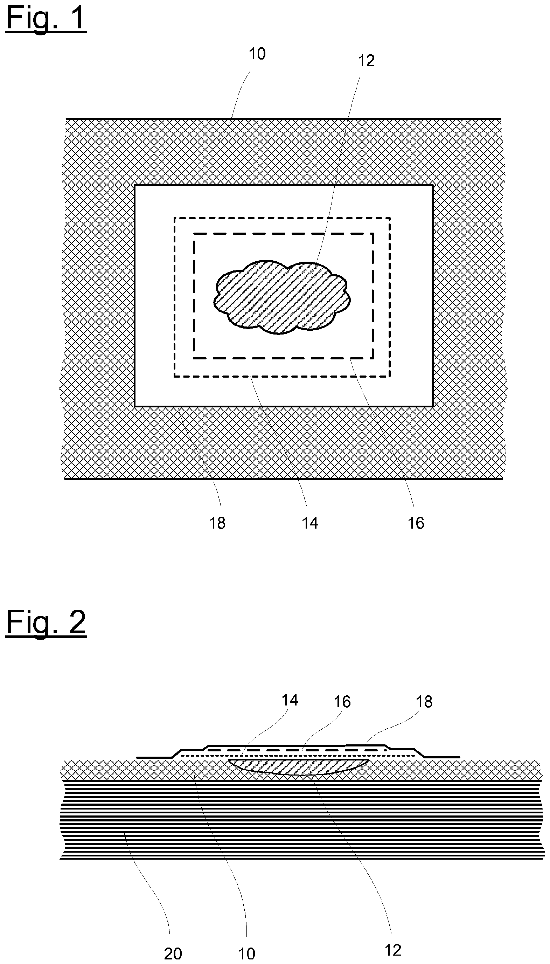

Der in der Figur 1 dargestellte Oberflächenbereich des Windenergieanlagenrotorblatts ist vollständig mit einem elektrischen Heizelement 10, das aus einem Gelege aus Kohlenstofffasern besteht, die in einer Kunststoffmatrix eingebettet sind, bedeckt. Das elektrische Heizelement 10 weist eine schraffiert dargestellte Fehlstelle 12 auf. In diesem Bereich ist die elektrische Leitfähigkeit des elektrischen Heizelements 10 beeinträchtigt, d.h. zumindest teilweise unterbrochen.

Nachdem die Fehlstelle 12 identifiziert wurde, ist eine elektrische Isolationslage 14 im Bereich der Fehlstelle aufgebracht worden. Im Beispiel wurde eine einzelne Lage eines Glasfasermaterials auflaminiert, d.h. auf die Oberfläche des Windenergieanlagenrotorblatts aufgelegt und nachfolgend mit einem aushärtenden Kunststoffmaterial durchtränkt. Ebenso gut könnte ein mit einem aushärtenden Kunststoffmaterial vorimprägniertes Glasfasermaterial verwendet werden, häufig bezeichnet als Prepreg.

Die elektrische Isolationslage 14 ist deutlich größer als die Fehlstelle 12 und steht mit ihren Rändern zu allen Seiten über die Fehlstelle 12 über.

Auf die elektrische Isolationslage 14 ist eine wärmeleitfähige Lage 16 aufgebracht worden. Diese besteht im Beispiel aus einer Graphitfolie mit einer Stärke von 0,25 mm. Die wärmeleitfähige Lage 16 ist kleiner als die elektrische Isolationslage 14 und deckt den Bereich der Fehlstelle 12 vollflächig ab, wobei sie über die Ränder der Fehlstelle 12 zu allen Seiten um einige Zentimeter übersteht.

Die gesamte Anordnung aus elektrischer Isolationslage 14 und wärmeleitfähiger Lage 16 ist von einer Deckschicht 18 abgedeckt, die ebenfalls aus einer einzelnen Lage eines auflaminierten Glasfasermaterials besteht. Die Deckschicht 18 steht zu allen Seiten über die wärmeleitfähige Lage 16 und die elektrische Isolationslage 14 über. Die Isolationslage 14 und die wärmeleitfähige Lage 16 bilden gemeinsam eine Reparaturschicht, die wärmeleitfähig und an der Unterseite elektrisch isolierend ist.

In der Querschnittsdarstellung der Figur 2 wird die Anordnung der genannten Elemente zueinander nochmals deutlich. Der mit waagerechten Linien schraffierte Bereich stellt eine Rotorblattwandung 20 dar, insbesondere aus einem Faserverbundwerkstoff. Auf dieser befindet sich das Heizelement 10. Die Fehlstelle 12 durchdringt das elektrische Heizelement 10 nur teilweise. Ebenfalls möglich ist eine tiefere Beschädigung, insbesondere eine solche, die das Heizelement 10 im Bereich der Fehlstelle vollständig unterbricht. Auf die Oberfläche des Heizelements 10 ist im Bereich der Fehlstelle 12 zunächst die elektrische Isolationslage 14 aufgebracht. Oberhalb davon ist die wärmeleitfähige Lage 16 angeordnet. Ganz oben befindet sich die Deckschicht 18.

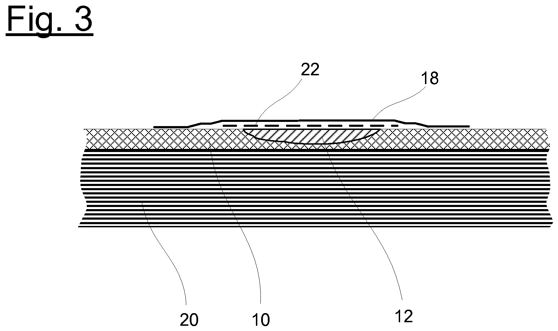

Figur 3 zeigt eine erfindungsgemäße Alternative. Die der Lösung der Figuren 1 und 2 entsprechenden Elemente sind mit den gleichen Bezugszeichen versehen und werden nicht nochmals erläutert. Die Reparaturschicht 22 besteht aus einem mit wärmeleitfähigen Partikeln verfüllten Polymerwerkstoff. Dadurch ist die homogen aufgebaute Reparaturschicht 22 elektrisch isolierend und dennoch hoch wärmeleitfähig.

### Liste der verwendeten Bezugszeichen

- 10: Heizelement
- 12: Fehlstelle
- 14: elektrische Isolationslage
- 16: wärmeleitfähige Lage
- 18: Deckschicht
- 20: Rotorblattwandung
- 22: Reparaturschicht

## Patentansprüche

1. Verfahren zum Reparieren eines elektrischen Heizelements (10) eines Windenergieanlagenrotorblatts mit den folgenden Schritten:
• Identifizieren eines Bereichs des Heizelements (10), der eine Fehlstelle (12) aufweist,
• Aufbringen einer Reparaturschicht (22) auf den identifizierten Bereich, die eine spezifische Wärmeleitfähigkeit von mindestens 10 W/m·K aufweist und mindestens an einer der Fehlstelle (12) zugewandten Unterseite elektrisch isolierend ist.

2. Verfahren nach Anspruch 1, **dadurch gekennzeichnet, dass** die Reparaturschicht (22) aus einer Lage besteht und ein elektrisch nicht leitendes Basismaterial aufweist, welches mit wärmeleitenden Komponenten verfüllt ist.

3. Verfahren nach Anspruch 2, **dadurch gekennzeichnet, dass** das Basismaterial ein Polymerwerkstoff ist.

4. Verfahren nach Anspruch 1, **dadurch gekennzeichnet, dass** die Reparaturschicht (22) zwei Lagen umfasst und das Aufbringen der Reparaturschicht (22) die folgenden Schritte umfasst:
• Aufbringen einer elektrischen Isolationslage (14) auf den identifizierten Bereich und
• Aufbringen einer wärmeleitfähigen Lage (16) auf die elektrische Isolationslage (14).

5. Verfahren nach Anspruch 4, **dadurch gekennzeichnet, dass** die wärmeleitfähige Lage (16) eine Stärke im Bereich von 0,1 mm bis 1 mm aufweist.

6. Verfahren nach Anspruch 4 oder 5, **dadurch gekennzeichnet, dass** die wärmeleitfähige Lage (16) eine Graphitfolie aufweist.

7. Verfahren nach Anspruch 4 oder 5, **dadurch gekennzeichnet, dass** die wärmeleitfähige Lage (16) eine metallische Folie aufweist.

8. Verfahren nach einem der Ansprüche 1 bis 7, **gekennzeichnet durch** den weiteren Schritt:
• Aufbringen einer Deckschicht (18) auf die Reparaturschicht (22).

9. Verfahren nach Anspruch 8, **dadurch gekennzeichnet, dass** die Deckschicht (18) über seitliche Ränder der Reparaturschicht (22) übersteht.

10. Verfahren nach einem der Anspruch 8 oder 9, **dadurch gekennzeichnet, dass** die elektrische Isolationslage (14) und/oder die Deckschicht (18) eine Lage eines Glasfasermaterials aufweist.

11. Verfahren nach einem der Ansprüche 8 bis 10, **dadurch gekennzeichnet, dass** die elektrische Isolationslage (14) und/oder die Deckschicht (18) eine Stärke von weniger als 0,5 mm aufweist.

12. Verfahren nach einem der Ansprüche 1 bis 11, **dadurch gekennzeichnet, dass** die Reparaturschicht (22) eine Stärke im Bereich von 0,1 mm bis 1 mm aufweist.

13. Verfahren nach einem der Ansprüche 1 bis 12, **gekennzeichnet durch** den weiteren Schritt:
• Wiederherstellen der elektrischen Leitfähigkeit des Heizelements (10) im Bereich der Fehlstelle (12) vor dem Aufbringen der Reparaturschicht (22).

14. Verfahren nach Anspruch 13, **dadurch gekennzeichnet, dass** zum Wiederherstellen der elektrischen Leitfähigkeit ein Flicken aus einem Kohlenstofffasermaterial oder aus einer metallischen Folie im Bereich der Fehlstelle (12) aufgebracht und in elektrischen Kontakt mit dem Heizelement (10) gebracht wird.

15. Verfahren nach Anspruch 13 oder 14, **dadurch gekennzeichnet, dass** zum Wiederherstellen der elektrischen Leitfähigkeit ein elektrisch leitfähiger Klebstoff auf die Fehlstelle (12) aufgebracht wird.

## Claims

1. A method for repairing an electrical heating element (10) of a wind turbine rotor blade, having the following steps:
• identifying a region of the heating element (10) that has a defect (12),
• applying a repair layer (22) to the identified region, said repair layer (22) having a specific thermal conductivity of at least 10W/m·K and being electrically insulating at least on an underside facing the defect (12).

2. The method according to claim 1, **characterized in that** the repair layer (22) consists of one ply and has an electrically nonconductive base material which is filled with thermally conductive components.

3. The method according to claim 2, **characterized in that** the base material is a polymer material.

4. The method according to claim 1, **characterized in that** the repair layer (22) includes two plies and the application of the repair layer (22) comprises the following steps of:
• applying an electrical insulation ply (14) to the identified region and
• applying a thermally conductive ply (16) to the electrical insulation ply (14).

5. The method according to claim 4, **characterized in that** the thermally conductive ply (16) has a thickness in the range from 0.1 mm to 1 mm.

6. The method according to claim 4 or 5, **characterized in that** the thermally conductive ply (16) has a graphite foil.

7. The method according to claim 4 or 5, **characterized in that** the thermally conductive ply (16) has a metal foil.

8. The method according to one of the claims 1 to 7, **characterized by** the further step of:
• applying a cover layer (18) to the repair layer (22).

9. The method according to claim 8, **characterized in that** the cover layer (18) projects beyond lateral edges of the repair layer (22).

10. The method according to one of the claims 8 and 9, **characterized in that** the electrical insulation ply (14) and/or the cover layer (18) has a ply of a glass fiber material.

11. The method according to one of the claims 8 to 10, **characterized in that** the electrical insulation ply (14) and/or the cover layer (18) has a thickness of less than 0.5 mm.

12. The method according to one of the claims 1 to 11, **characterized in that** the repair layer (22) has a thickness in the range from 0.1 mm to 1 mm.

13. The method according to one of the claims 1 to 12, **characterized by** the further step of:
• restoring the electrical conductivity of the heating element (10) in the region of the defect (12) prior to the application of the repair layer (22).

14. The method according to claim 13, **characterized in that**, in order to restore the electrical conductivity, a patch made of a carbon fiber material or of a metal foil is applied in the region of the defect (12) and is brought into electrical contact with the heating element (10).

15. The method according to claim 13 or 14, **characterized in that**, in order to restore the electrical conductivity, an electrically conductive adhesive is applied to the defect (12).

## Revendications

1. Procédé de réparation d'un élément de chauffage électrique (10) d'une pale de rotor d'éolienne, comprenant les étapes suivantes :
• identification d'une région de l'élément de chauffage (10) présentant une lacune (12),
• application d'une couche de réparation (22) sur la région identifiée, laquelle présente une conductivité thermique spécifique d'au moins 10 W/m.K tout en étant électriquement isolante au moins sur un côté inférieur tourné vers la lacune (12).

2. Procédé selon la revendication 1, **caractérisé en ce que** la couche de réparation (22) est constituée d'une épaisseur et présente un matériau de base non conducteur électriquement, lequel est rempli avec des composants thermo-conducteurs.

3. Procédé selon la revendication 2, **caractérisé en ce que** le matériau de base est un matériau polymère.

4. Procédé selon la revendication 1, **caractérisé en ce que** la couche de réparation (22) comporte deux épaisseurs et l'application de la couche de réparation (22) comporte les étapes suivantes :
• application d'une couche électriquement isolante (14) sur la région identifiée, et
• application d'une couche thermo-conductrice (16) sur la couche électriquement isolante (14).

5. Procédé selon la revendication 4, **caractérisé en ce que** la couche thermo-conductrice (16) présente une épaisseur dans la plage de 0,1 mm à 1 mm.

6. Procédé selon la revendication 4 ou 5, **caractérisé en ce que** la couche thermo-conductrice (16) présente une feuille de graphite.

7. Procédé selon la revendication 4 ou 5, **caractérisé en ce que** la couche thermo-conductrice (16) présente une feuille métallique.

8. Procédé selon l'une des revendications 1 à 7, **caractérisé par** l'étape supplémentaire suivante :
• application d'une couche de couverture (18) sur la couche de réparation (22).

9. Procédé selon la revendication 8, **caractérisé en ce que** la couche de couverture (18) fait saillie au-delà de bords latéraux de la couche de réparation (22).

10. Procédé selon l'une des revendications 8 ou 9, **caractérisé en ce que** la couche électriquement isolante (14) et/ou la couche de couverture (18) présentent une épaisseur d'un matériau à base de fibres de verre.

11. Procédé selon l'une des revendications 8 à 10, **caractérisé en ce que** la couche électriquement isolante (14) et/ou la couche de de couverture (18) présentent une épaisseur de moins de 0,5 mm.

12. Procédé selon l'une des revendications 1 à 11, **caractérisé en ce que** la couche de réparation (22) présente une épaisseur dans la plage de 0,1 mm à 1 mm.

13. Procédé selon l'une des revendications 1 à 12, **caractérisé par** l'étape supplémentaire suivante :
• rétablissement de la conductivité électrique de l'élément de chauffage (10) dans la région de la lacune (12) avant l'application de la couche de réparation (22).

14. Procédé selon la revendication 13, **caractérisé en ce que** pour rétablir la conductivité thermique, une pièce constituée d'un matériau à base de fibres de carbone ou d'une feuille métallique est appliquée dans la région de la lacune (12) et mise en contact électrique avec l'élément de chauffage (10).

15. Procédé selon la revendication 13 ou 14, **caractérisé en ce que** pour rétablir la conductivité thermique, une colle électriquement conductrice est appliquée sur la lacune (12).
